# EUROPEAN PATENT APPLICATION

(11) **EP 4 434 348 A1**
(43) Date of publication of application: **25.09.2024**
(21) Application number: 22826125.1
(22) Date of filing: 15.11.2022
(51) Int. Cl.: A23B 9/02, A23B 9/08, A23B 9/20, A23L 5/10, A23L 5/30, A23L 5/42, A23L 5/00, A23L 7/196, A23L 27/00, A23L 3/02, A23L 3/3418, A23L 33/00

(54) **METHOD FOR MAKING PARTIALLY COOKED RICE, RICE MADE USING SAID METHOD, AND FOOD PRODUCT COMPRISING SAME**

(30) Priority: 18.11.2021 ES 202131073
(71) Applicant: SELECCIÓN MEDITERRÁNEA FINE FOODS, S.L., 28223 Pozuelo de Alarcón (Madrid) (ES)
(72) Inventor: PAIS MARTIEL, Cristóbal Jaime, 28223 Pozuelo de Alarcón (Madrid) (ES); QUEROL PEÑATE, Cristina, 28223 Pozuelo de Alarcón (Madrid) (ES)
(74) Representative: Ungria López, Javier
(86) International application number: PCT/ES2022/070734
(87) International publication number: WO 2023/089214

(57) **Abstract**

The object of the invention is a method for making partially cooked rice, comprising: (a) adding rice to a liquid at the boiling temperature of the liquid or at a lower temperature, in which case the mixture is subjected to a heating process up to between 101 and 200 °C, (b) subjecting the mixture to a cooking process at between 101 and 200 °C for 2 and 10 minutes, (c) separating the rice from the liquid and hydrating it without cooking by adding a liquid mixture to the rice and (d) maintaining the mixture until the rice has completely absorbed the liquid mixture. Another object of the invention is the partially cooked rice made from said process and a food product comprising the same, which requires, for its consumption, cooking for between 1 and 7 minutes without adding liquid.

## Description

### TECHNICAL FIELD

The present invention relates to a method for preparing rice with which it is possible to encapsulate aromas and flavours within the grain and which only requires finishing and short cooking at a later time without adding liquid for its consumption. This method has great versatility as it can incorporate various ingredients that give aroma and flavour such as vegetable or animal broths, vegetables, sauces, etc. Therefore, the invention can be included in the field of preparation of food products.

### BACKGROUND OF THE INVENTION

Each culture treats rice differently. There are cultures in which cooked white rice is consumed as an accompaniment to other dishes and in which its texture and also the taste of the cereal is valued above all. Other cultures use rice as a carrier for other flavours such as paellas and risottos. As rice cooking takes between 15 and 25 minutes depending on its variety, methods of precooking rice to shorten the final cooking times before consumption have been sought for decades. Various techniques are applied to cooked white rice such as steaming, dehydration and sterilisation. In these techniques, innovations have been seeking to improve the texture, retrogradation and post-cooking behaviour of rice, and the improvement of useful life, since it is not flavoured.

Patent WO 88/01137 describes a cooking method wherein rice is previously hydrated at a temperature between 55 and 70 °C to achieve a hydration of between 20% and 50% and then cooked at a temperature between 120 °C and 130 °C in a non-aqueous medium.

"Parboiling" rice is a classic method to reduce the starch within the grain. During the process the starch is completely gelatinised, having a firmer texture, and a higher tolerance to overcooking as advantages. As a drawback, starch does not absorb flavours, and being a good product for a white rice recipe, it is not for flavoured rice dishes such as paellas, sticky or brothy rice or risottos. Rice that is gelatinised and then dehydrated, such as the one described in patent US2438939A, has the advantage of having shorter completion times than parboiled or untreated rice, but the drawback that it requires adding water in the final cooking process to hydrate it. Puffed rice has the advantage that it subsequently hydrates very quickly, for example with milk, but it loses its shape, structure and texture.

In those preparations in which rice is used as a flavour carrier, such as rice in paella, sticky or brothy rice dishes or risottos, in addition to texture, conveying a flavour different from that of the cereal is sought. In the methods discussed above when using rice varieties with a high proportion of amylose or parboiled rice, the grain does not absorb the flavours, although it maintains a good texture.

Another method used to achieve shorter precooking and final cooking of flavoured rice is the double cooking method. It is described in the European patent application EP3111778A1 wherein rice is cooked in a broth, with or without stir-fry, with or without oil, and cooking is interrupted after a few minutes, before it has fully gelatinised and is chilled and refrigerated or frozen. At the time of consumption, it is necessary to add water or hot broth to complete cooking. Requiring adding broth or hot water implies that a high cooking temperature must be used, it takes minutes to bring that broth to boil and specialization is needed to avoid that the rice is overcooked or remains excessively raw. Furthermore, if water is used instead of broth for completion, the flavours of the first cooking are diluted.

Patent ES2702489 B2 describes a different method of precooking rice for paella-type preparations. It requires a second cooking wherein it is necessary to add a broth or water.

Commercial product "Mediterranean Risotto with Mushrooms" (Database GNPD, Mintel; 7 February 2017, XP093022984, Database accession No. 4603305) comprises a partially cooked rice which requires for its consumption a cooking time of 2 minutes.

US 2018/289047 discloses a cooked rice having a water content of about 65% to 69%.

US 3189461 discloses a cooked rice containing 70% moisture.

JP 4 949320 discloses a curry risotto which can be heated for 5 minutes using a 500W microwave oven.

Rewthong O. et al., "Effects of cooking, drying and pretreatment methods on texture and starch digestibility of instant rice", Journal of Food Engineering, vol. 103, no. 3, 2011, discloses the effect of cooling the rice after cooking on the Glycaemic Index (Gl) value of the rice.

### DESCRIPTION OF THE INVENTION

The present invention relates to a new method that allows to encapsulate aromas and flavours inside the rice grains, shortening the final cooking time, reducing the energy required and minimising the manipulations that must be carried out by hostelry staff or the final consumer and eliminating the lack of regularity of the quality of the finished rice.

It is a method of cooking rice that allows partially gelatinised rice in a first phase to subsequently absorb a liquid mixture at a certain room temperature that flavours it and that in the subsequent and final cooking it is not necessary to add any additional liquid nor treat it with a high cooking temperature before its consumption. This differentiates the product of the invention from commercialised rice wherein the rice is already fully gelatinised and finished and requires reheating the rice to be consumed. Furthermore, this technology shortens the final cooking time of flavoured rice, it considerably facilitates the operations required for finishing and allows new forms of consumption to be created by not requiring high temperatures or the final addition of broth.

The encapsulation technique that is achieved with the method of the invention consists of cooking the rice at a temperature between 101 and 200 °C, preferably between 101 and 140 °C, and more preferably between 110 and 130 °C, in water or broth for 2 to 10 minutes, preferably 3 to 7 minutes and more preferably 3 to 6 minutes, allowing the grain to partially gelatinise and expand during the cooking process due to the action of temperature, creating more and larger cavities within the grain. The grain expands more, is 30% longer, than in traditional cooking, traditional being understood as that which is carried out at around 80-100 °C.

After the cooking described, the rice is hydrated in a liquid mixture without it being required to use a cooking temperature. This hydration fills the rice grain with the flavouring liquid. This flavouring liquid can include different proportions of broths/fumets/stocks, fats (vegetable oils, butter, cheeses or other animal fats), seasonings, spices, aromatic substances, dyes, preservatives, additives, pasty elements (tomato, spicy red pepper, garlic...), sauces (soy, fish sauce, garum...) and other foods such as liquid egg, starch, liquid smoke, cheese, wines, vegetables processed into paste, animal or vegetable proteins or any water-soluble or fat-soluble ingredient. The rice absorbs this emulsion through this treatment, which can be carried out from 5 degrees without the need to use cooking temperatures. This grain hydration process, by not requiring high temperatures, does not imply a cooking of the grain, since it does not cause a gelatinisation increase thereof. In this way, upon ending hydration and absorbing the entire emulsion, this rice maintains its texture, which is that of rice only partially cooked that simply requires, therefore, a final cooking for its consumption.

This encapsulation technique allows millimetre precision in gelatinisation, since it allows the amount of emulsion to be incorporated into the recipe to be very accurately adjusted, thus adjusting the gelatinisation points to the different tastes of consumers depending on their geographical area and the recipe that is executed (risotto, paella, different varieties of flavoured rice...), which are very diverse depending on the original recipe and the geographical area of the planet in which it is consumed.

At the time of consumption, the remaining final cooking time has been considerably shortened. In practice, with the encapsulation treatment, the rice made by means of the method of the invention will finish cooking, without adding water or broth, between one and seven minutes, usually between two and five minutes and, normally, less than five minutes, according to the method of heat transfer and the working temperature. In an additional particular embodiment of the invention, the heating process can be carried out at a temperature of 70 °C for a period of 15 minutes.

At its completion, by not adding broth or requiring high cooking temperatures, the encapsulation technique provides several important advantages since it allows finishing the rice dishes in any type of kitchen infrastructure or even without a kitchen, it is more versatile in terms of containers, and offers very little margin for error in completion, thus making it easier to meet several of the Sustainable Development Goals and the 2030 Agenda promoted by the UN, specifically:
- objective 5, Gender equality, and 10, Reduction of inequalities, in terms of facilitating inclusion by allowing access to employment to people without requiring a high degree of specialisation both in the production phase and in the restaurants where the product will be used and will be completed, thus facilitating equal work and opportunities;
- by disaggregating the rice treatment phases, an improvement in working conditions is achieved, goal 8, that facilitates equal opportunities by being less physically intense;
- regarding responsible production, there is an improvement in line with objective 12 due to the significant reduction in electricity consumption achieved by eliminating part of the cooking and a substantial increase in efficiency in the use of water, estimated at a 40% reduction in consumption, by avoiding evaporation during part of cooking.

Therefore, in a first aspect, the present invention relates to a method for making partially cooked rice comprising the following steps:
a) adding rice in a liquid, wherein said liquid accounts for at least 80% and preferably between 150% and 250% of the weight of the added rice, and wherein the addition of the rice to the liquid is carried out at the boiling temperature of the liquid or at a temperature lower than said boiling temperature of the liquid, in which case the rice mixture in the liquid is then subjected to a heating process until it reaches a temperature comprised between 101 and 200 °C,
b) allow the previous mixture to cook at a temperature between 101 and 200 °C, preferably at a temperature between 101 and 140 °C for a time between 2 to 10 minutes, until the grain has an increase in weight of between 100% and 170% with respect to the weight of the rice initially added in step (a),
c) separating the rice from the remaining liquid after step (b) of cooking and proceeding to hydrate it without cooking by adding a liquid mixture to the rice, once separated,
d) maintaining the previous mixture until the rice has completely absorbed the liquid mixture and preferably for a period of 15 minutes to 3 hours.

In a preferred embodiment, the cooking of step (b) is carried out at a temperature between 110 and 130 °C.

In another preferred embodiment, the cooking of step (b) is carried out for a time of between 3 and 7 minutes.

In the present invention, cooking is understood as a method for applying heat to food to modify its physicochemical properties and its organoleptic characteristics, so that they can be properly ingested or to improve their taste on the palate.

In a preferred embodiment, in the process of heating the mixture of rice and liquid made in step (a) the temperature can be reached by heating directly at atmospheric pressure, at above atmospheric pressure or with overheated steam. Atmospheric pressure is understood to be 1 atm. and overheated steam is understood to be steam at a temperature above its parboiling (boiling) point at the absolute pressure where the temperature is measured.

The liquid mixture of step (c) can be very variable depending on the type of dish to be made (paellas, risottos, brothy rice, etc.) and admits a wide variety of animal and vegetable ingredients. In a preferred embodiment, the liquid mixture of step (c) comprises animal or vegetable broth, animal fat or vegetable oil, vegetables processed into paste such as tomato, garlic, pepper, etc., aromas, additives, preservatives, dyes, soy sauce, liquid egg, starch, spices, cheese, wine, animal or vegetable proteins or combinations thereof. This subsequent hydration allows to fill the cavities inside the grain created by the partial gelatinisation produced in step (a).

In another preferred embodiment, in step (c), the rice separated from the remaining liquid after cooking is cooled prior to its hydration, preferably up to a temperature of 10 °C. In another preferred embodiment of step (c), the rice separated from the remaining liquid after cooking in step (b) is dehydrated prior to its hydration with the liquid mixture, in order to keep rice at room temperature with a long shelf life, longer than six months and subsequently hydrate it closer to the date of consumption. This dehydration step can be carried out using hot air, UV radiation or microwaves until the rice reaches a moisture below 10%.

In a preferred embodiment, the liquid mixture from step (c) is added at a temperature between 5 and 80 °C.

In another preferred embodiment, the hydration of the grain in step (c) is maintained until the grain multiplies its weight by at least 2.3 times with respect to the initial weight of rice added in step (a).

In another preferred embodiment, the liquid mixture of step (c) that is added to hydrate the rice is between 50 and 200% by weight with respect to the initial weight of rice added in step (a). This amount will depend on the variety of rice selected and the recipe sought.

In another preferred embodiment, the time in step (d) is between 20 minutes and 2 hours. This subsequent hydration can take between 20 minutes and 2 hours depending on the proportion of emulsion included, the variety of rice, its percentages of amylose and amylopectin, the temperature of the ingredients, and if a post-cooking dehydration of the grain has been previously carried out.

This hydration allows the grain to absorb more broth than in traditional cooking. By absorbing more broth the following results are achieved:
a. by being larger and incorporating more liquid inside the grain, an increase in productivity is achieved. 1 kilo of raw rice becomes 2.2 kilos in traditional cooking and with encapsulation 2.93 kilos are obtained, a weight increase of 32%, which equates to 30% more servings of rice, which go up from 10 to 13 servings;
b. the grain is more aesthetic and commercial, for example, specifically in the recipe for rice in paella, with the Bomba variety, with cooking at 120 °C for 3:30 minutes and hydration of an emulsion that represents 120% of the initial weight of dry rice, the resulting rice is 30% longer and 8% wider, without deforming, than in traditional cooking with the same ingredients;
c. the grain has more flavour: in the studies carried out, the moisture percentage resulting from traditional cooking is 57.5% moisture and with the encapsulation achieved with the method of the invention, reaches 68.8% moisture. By adding more flavoured broth, the rice has more flavour.

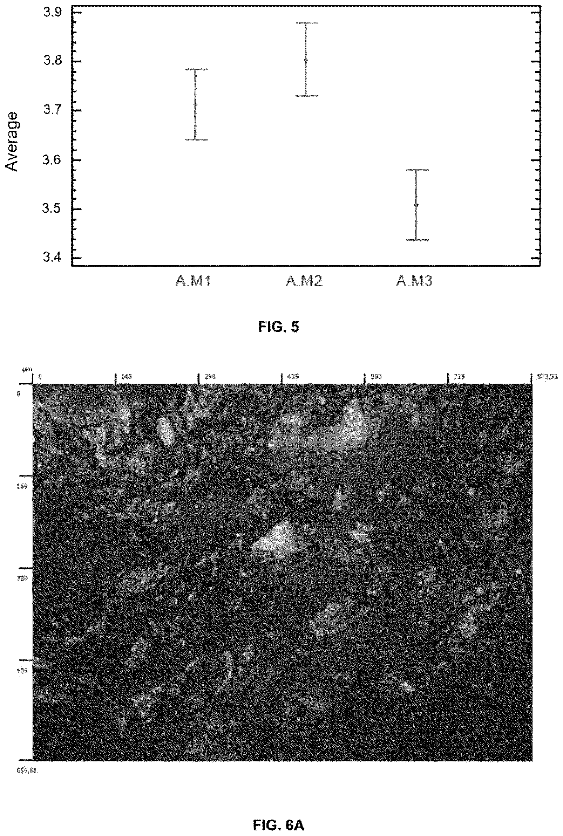

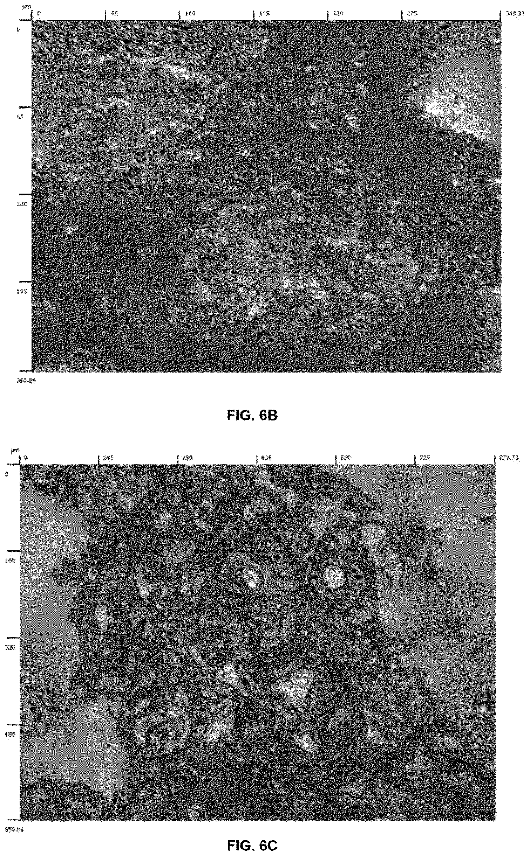

After examination with confocal electron microscopy, regarding the morphology of the grain and its microstructure, the grains made by the method of the invention have a flatter surface, with less relief and fewer grooves, as can be seen in the attached photos (FIG. 6) which significantly improve the post-cooking behaviour of the grain in two areas:
a. in the post-cooking retrogradation of rice after the last cooking, the size, the shape and hydration being much better maintained for several hours than with the traditional technique wherein it is minutes; and
b. in the possibility of reheating without real loss of texture of the cooked grain.

In a preferred embodiment, the rice is non-parboiled rice with low or medium amylose content. In the present invention, a low amylose content is understood to be less than 22% by weight and an average content of between 22 and 25% by weight. Taking this criterion into account, the following types of rice can be considered as the most preferred for the method of the invention: Bomba, Senia, Bahía, J. Sendra, Albufera, Arborio, Carnaroli, Maratelli, Venere or Vialone nano.

In a preferred embodiment, to favour the conservation of the product made, a step (e) of vacuum packaging or packaging with a modified atmosphere of the product made in step (d) is carried out. Modified atmosphere packaging (EAM or MAP) involves the removal of air from the inside of the container and its replacement by a gas or mixture of gases, usually CO₂, O₂ or N₂. Another preferred embodiment for the preservation of the product is to carry out a step (f) of pasteurisation of the product made in step (e).

Another aspect of the invention relates to partially cooked rice made by means of a method as described, characterised in that it has a low *in vitro* glycaemic index, lower than 45 and in that, in particular embodiments, rice contains between 60 and 70% moisture by weight. In addition, the weight of the rice can be at least 2.8 times the weight of the initial dry rice used in step (a) of the process to make it.

Another object of the invention is a food product that comprises the rice made by means of the claimed method characterised in that, for its consumption, requires cooking between 1 and 7 minutes and, in general, between 2 and 5 minutes, without adding liquid because it already contains all the required liquid incorporated inside the grain.

The rice-based product of the invention can be finished by final cooking in a gas cooker, glass-ceramic or induction cooker, in a container like paella pan, skillet, wok or casserole, over medium heat for 1 to 7 minutes and generally 2 to 5 minutes without adding additional liquid. It can also be finished in a combi oven in any type of container at a temperature of, for example, 180 °C for 5 minutes without adding additional liquid. It can also be finished on the grill with charcoal or in a wood or charcoal oven in 1.5 to 3 minutes without adding additional liquid. It can also be microwaved in 2.5 minutes at 700MW without adding additional liquid.

### BRIEF DESCRIPTION OF THE FIGURES

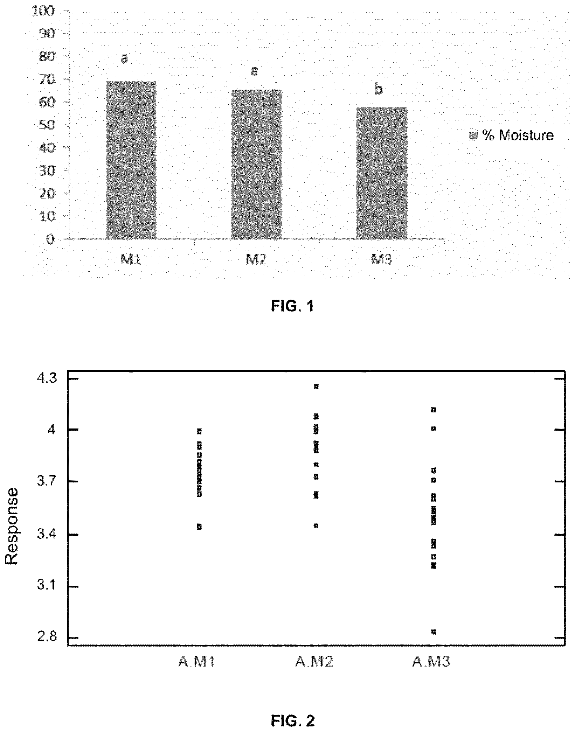

Figure 1 shows the moisture percentage determined in the three types of cooked rice (M1, M2 and M3). For each variable (% moisture) different letters (a, b) indicate significant differences between the samples.
Figure 2 shows a representation of the different repetitions (n=20) of the grain length measurements for each sample type (M1, M2, M3).

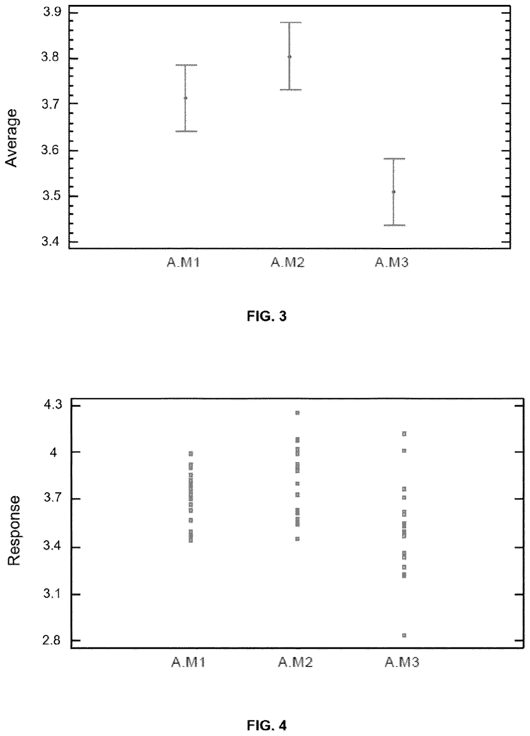

Figure 3 shows a comparison of the average results corresponding to the length of the rice grain and confidence intervals at 95% for each sample type (M1, M2, M3).
Figure 4 shows a comparison of the average results corresponding to the width of the rice grain and confidence intervals at 95% for each sample type (M1, M2, M3).
Figure 5 shows a representation of the different repetitions (n=20) of the grain width measurements for each sample type (M1, M2, M3).
Figure 6 shows photomicrographs of the rice grain for samples M1 (FIG. 6A), M2 (FIG. 6B), and M3 (FIG. 6C).

### EXAMPLES OF THE INVENTION

### Example 1. Preparation of rice by means of the method of the invention

A Bomba variety rice was prepared according to the method of the invention. For this, 90 grams of rice were taken in 0.230 litres of boiling water and cooked at 120 °C for 3:30 minutes. Subsequently, the rice was separated from the liquid and it was hydrated with a liquid mixture that is an emulsion made from various ingredients that represents 120% of the initial weight of dry rice. The rice and the emulsion were maintained for 30 min until the total absorption of the emulsion.

### Example 2. Comparative study of rice made by means of different methods

Three types of rice samples from three different types of cooking were evaluated:
- Sample 1: Rice made by means of steps a)-d) of the method of the invention (M1). This sample type was prepared at the applicant's facilities and subsequently sent for analysis to the laboratory of the Institute for Research in Food Sciences (CIAL), of the Superior Council for Scientific Research (CSIC) and the Autonomous University of Madrid (UAM). All the samples in this group came from the same rice preparation.
- Sample 2. Rice made by means of steps a)-d) of the method of the invention which has been subjected to a final cooking (M2). In this case, the samples were subjected to final cooking in the microwave for 2.5 minutes.
- Sample 3: Traditionally cooked rice (M3). This sample was prepared in the laboratory facilities. Two different preparations were carried out.

Sample 1 was sent by the applicant to the CIAL facilities where it was preserved in a desiccator for a period not exceeding 1 hour, up to the time of analysis. This sample of rice came from the same preparation. Of this general sample 1, six samples were set aside to carry out moisture determinations. The same sample 1 was subjected to microwave cooking to make the finished rice. This final cooking was carried out in the laboratory facilities to make sample 2, which was allowed to warm in the desiccator before analysis. Of this general sample 2, 6 samples were taken for analysis. Sample 3, corresponding to the traditional preparation, was prepared in the laboratory facilities. Two preparations were carried out. Two samples from the first preparation and two samples from the second preparation (n=4) were set aside for analysis. They were allowed to warm in the desiccator until the moment of their analysis. In the case of the samples for carrying out confocal microscopy, all three preparations were prepared by the applicant and analyses were carried out within the first hour after preparation. During this time, the samples were preserved in thermal bags.

The following analytical determinations were made:

### a) Moisture percentage

The moisture percentage of each sample type that corresponds to the absorbed liquid was determined by gravimetry (Oliva-Artega et al., (2018). ION Magazine, 31(1), 25-29) using a convection stove and evaluating weight loss.

### b) Confocal electron microscopy

The three rice samples (M1, M2, M3) were analysed using a nondestructive confocal microscopy technique that allowed a three-dimensional image of the profile of the rice grain to be taken.

### RESULTS

Table 1 shows the moisture results determined for each type of rice considering the different repetitions.

**Table 1. Values corresponding to the moisture percentage determined in the different samples of cooked rice.**

| **CODE** | **Repetition** | **% Moisture** |
|---|---|---|
| M1 | A | 69.52 |
| M1 | B | 69.19 |
| M1 | C | 69.48 |
| M1 | D | 53.15 |
| M1 | E | 63.11 |
| M1 | F | 67.91 |
| M2 | A | 69.87 |
| M2 | B | 69.25 |
| M2 | C | 69.38 |
| M2 | D | 66.64 |
| M2 | E | 70.06 |
| M2 | F | 67.99 |
| M3 | A | 57.37 |
| M3 | B | 58.06 |
| M3 | C | 56.26 |
| M3 | D | 58.37 |

To verify whether there were significant differences between the three types of samples, an analysis of variance (ANOVA) was carried out, comparing the average values of each parameter with a confidence level greater than 95%. The results are shown in table 2. As it can be observed, the moisture percentage of the three samples was between the lowest value that was determined in the traditional rice sample (M3), of 57.5%, and the highest value (68.86%) which corresponded to the sample M2 (rice sample subjected to final cooking). The application of the ANOVA statistical technique allows us to verify that the differences in these values are significant between the sample M3 and the other two (M1 and M2).

**Table 2. Results of the ANOVA to evaluate the existence of significant differences (p<0.05) between the three types of rice.**

| | %Moisture* |
|---|---|
| M2 | 68.8 a |
| M1 | 65.4 a |
| M3 | 57.5 b |
| Pr> F(model) | 0.003 |
| Significant | Yes |

| | |
|---|---|
| **Different letters indicate significant differences between samples.* | |

### c) Confocal microscopic analysis of rice grain.

The images obtained from the confocal microscope, once superimposed, generate a 3D image in which the profile or topography of the granule can be appreciated. These measurements have been carried out in three different locations of the grain. The microphotographs of the three types of grains (50x) are shown in Figure 6. As it can be seen in the images, the morphology seems different in the three types of rice. While the profile of M1 and M2 is more similar, in the case of M3, it is observed that it is different. It can be seen that in M3 there is more surface liquid in the grain, which is not present or is present to a lesser extent in the other two profiles.

### CONCLUSIONS

Significant differences in the moisture percentage have been found between the three samples of cooked rice. Traditional rice (M3) presents significantly lower moisture content than the samples prepared with the method developed by the company (M1 and M2). Regarding the morphology of the rice grain, differences are observed in the grain profile in the three types of rice, M1 and M2 being more similar to each other, and more different from traditional rice M3.

### Example 3. Measurements of the length and width of rice grains subjected to different cooking methods

The rice samples were prepared at the applicant's facilities and cooked according to the methods described above: M1 (unfinished rice), M2 (rice finished in microwave), and M3 (traditional rice). All of them were taken to the laboratory for the analyses that were carried out immediately after their reception.

A 15 cm DEXTER digital calliper with 1/100 precision was used, with which the length of the grain was determined, from the upper end to the lower end, and its width in the middle section of the grain. Before measuring each grain, they were placed on adhesive tape in order to keep the quantity and order of the grains measured under control. In total, 20 measurements were made for each type of preparation. Furthermore, measurements of the weight (mg) of 20 grains of raw rice and 20 grains of rice cooked with the different methods were taken. In this way, the increase in weight with respect to the raw grain was calculated. For the statistical treatment of the results, the *Statgraphics* program was used to carry out the analysis of variance and the comparison of means (95% confidence level).

### RESULTS

### 1. Grain length

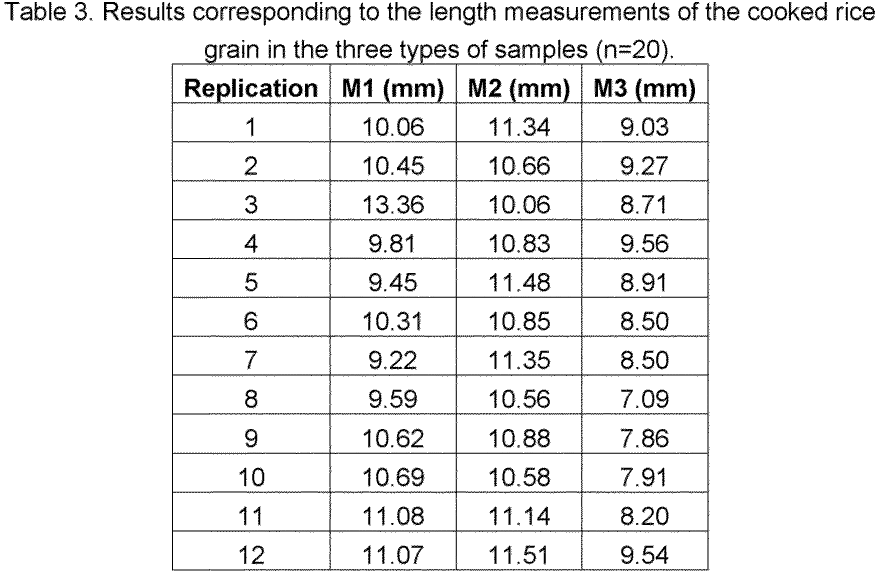

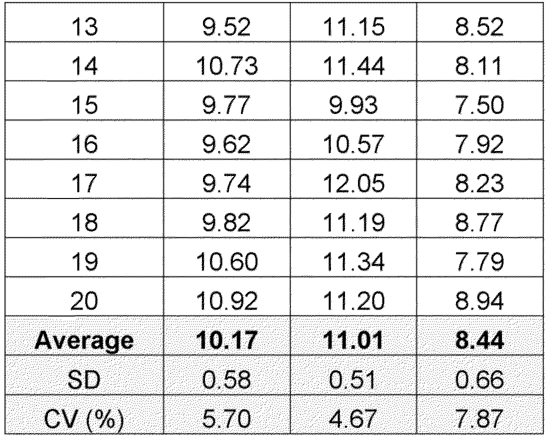

**Table 4. Results of comparison of means by means of the LSD statistical method.**

| | Counting | Average | Homogeneous groups |
|---|---|---|---|
| B.M3 | 20 | 8.44 | X |
| B.M1 | 20 | 10.1715 | X |
| B.M2 | 20 | 2.5625 | X |

| Contrast | Next. | Difference | +/- Limits |
|---|---|---|---|
| B.M1 - B.M2 | * | -0.834 | 0.373354 |
| B.M1 - B.M3 | * | 1.7285 | 0.373354 |
| B.M2 - B.M3 | * | 2.5625 | 0.373354 |

| | | | |
|---|---|---|---|
| ** denotes statistically significant difference* | | | |

As shown in Table 4, the means corresponding to the length of the three types of grains are all significantly different from each other with a probability of 95%. The sample that presents the longest grain length is the sample M2 (11 mm), followed by the sample M1 (10.17 mm), and the one with the smallest size is the rice sample M3 (8.44 mm).

### 2- Grain width

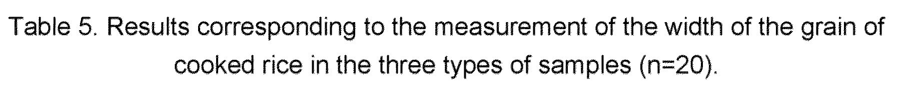

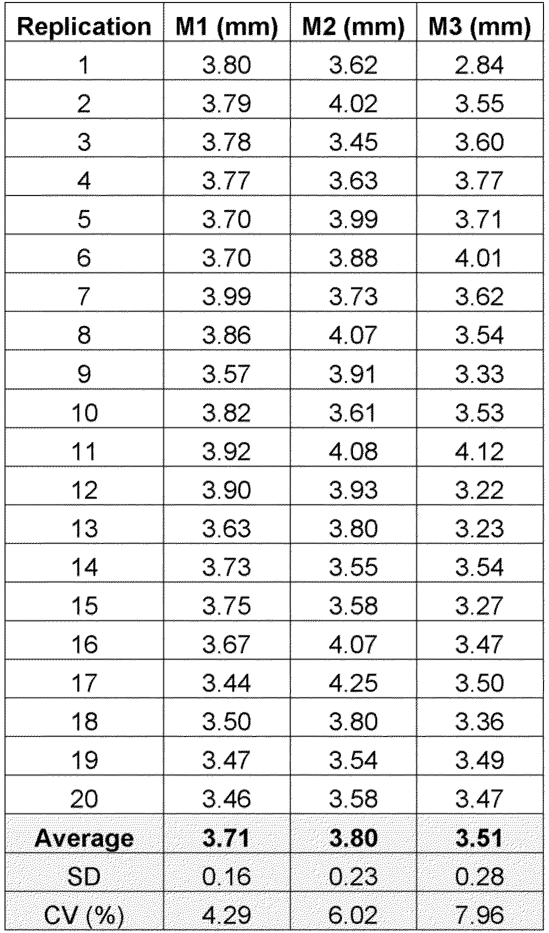

**Table 6. Results of comparison of the average results of the measurement of the width of the grain of rice by means of the statistical method (LSD).**

| | Counting | Average | Homogeneous groups |
|---|---|---|---|
| A.M3 | 20 | 3.5085 | X |
| A.M1 | 20 | 3.7125 | X |
| A.M2 | 20 | 3.8045 | X |

| Contrast | Next. | Difference | +/- Limits |
|---|---|---|---|
| A.M1 - A.M2 | | -0.092 | 0.144354 |
| A.M1 - A.M3 | * | 0.204 | 0.144354 |
| A.M2 - A.M3 | * | 0.296 | 0.144354 |

| | | | |
|---|---|---|---|
| ** denotes statistically significant difference* | | | |

As shown in Table 6, the means corresponding to the width of the rice grain in the sample M1 (3.7 mm) and the sample M2 (3.8 mm) are not significantly different from each other. Nevertheless, both samples are different from the sample M3. The sample M3 is the one with a significantly smaller width (3.5 mm) compared to M1 and M2.

**Table 7. Comparison of the weight (mg) of 20 grains of raw and cooked rice using the encapsulation technique and the traditional one (M2 and M3).**

| | **Raw grain** | **M2** | **M3** |
|---|---|---|---|
| Weight (mg) | 452.1 | 1326 | 1005.6 |
| Weight gain during cooking (mg) | - | 873.4 | 553.4 |

As it can be observed in Table 7, taking as an example the weight of 20 grains of raw rice, the percentage of weight increase after cooking was higher in the case of the rice M2 (weight increase of 2.93x), compared to the rice M3 (2.22x weight increase)

### CONCLUSIONS

The length of the rice grain is greater in the case of sample M2, than in sample M3. Rice grain M2 is 30.4% larger than rice grain M3. Regarding the width, the sample M2 is significantly larger than in the case of the sample M3. The grain M2 has a width 8.2% greater compared to the rice grains M3. These results coincide with the highest percentage of weight increase during cooking that has been verified for rice M2, rather than rice M3. This experiences a lower percentage of weight gain, which is in agreement with the smallest length and width determined in this type of rice.

### Example 4. Determination of the Glycaemic Index of rice made by means of the method of the invention.

For the measurement of the Glycaemic Index of the rice made through the claimed process, two different analyses were carried out, the first of them at the National Centre for Food Technology and Safety (CNTA) and the second at the Qualtech SAS laboratory:

### 4.1. In vitro GI analysis made in CNTA:

For the determination of the *in vitro* GI, an *in vitro* digestion is carried out of the carbohydrates present in the sample with amylase and amyloglucosidase enzymes and a release curve of reducing sugars released during the digestion process is constructed. By calculating the area under the curve, the hydrolysis index (HI) compared to a reference (white bread) is obtained and, by means of an empirical equation, this HI value is related to the predicted glycaemic index (PGI). The results are expressed in both parameters taking glucose as reference (GI=100).

The result of the Glycaemic Index obtained by this method was 40.

### 4.2 Qualtech in vitro GI analysis:

The foundation of this method is based on an *in vitro* enzymatic digestion. Two fractions are taken at 20 and 120 minutes. The inverted sugars (glucose and fructose) contained in these fractions are injected into ion chromatography with electrochemical detection. The *in vitro* method carried out by Qualtech allows products to be classified between low GI (<55), moderate GI (>55 and <70) and high GI (>70).

The result of the Glycaemic Index obtained by this method was 43.50.

### CONCLUSIONS

Based on the results obtained in the tests carried out, it can be concluded that the rice made by means of the claimed process has a low Glycaemic Index, lower than 45.

## Claims

1. A method for making partially cooked rice, **characterised in that** it comprises the following steps:
a) adding rice in a liquid, wherein said liquid is comprised in a percentage by weight of at least 80% of the weight of the rice added and wherein the addition of the rice to the liquid is carried out at the boiling temperature of the liquid or at a temperature lower than said boiling temperature of the liquid, in which case the rice mixture in the liquid is subjected to a heating process until it reaches a temperature comprised between 101 and 200 °C,
b) subjecting the mixture made in the previous step to a cooking process at a temperature between 101 and 200 °C for a time between 2 and 10 minutes, producing rice with a weight increase of between 100% and 170% with respect to the weight of the rice initially added in step (a),
c) separating the rice from the remaining liquid after step (b) of cooking and proceeding to hydrate it without cooking by adding a liquid mixture to the rice, once separated, and
d) maintaining the mixture made in step (c) until the rice has completely absorbed the liquid mixture.

2. The method according to claim 1, wherein the percentage of liquid in the mixture with rice made in step (a) is comprised between 150% and 250% of the weight of the added rice.

3. The method according to claim 1 or 2, wherein step (b) of cooking is carried out at a temperature between 101 and 140 °C.

4. The method according to claim 1 or 2, wherein step (b) of cooking is carried out at a temperature between 110 and 130 °C.

5. The method according to any one of claims 1 to 4, wherein step (d) is carried out for a time of 15 minutes to 3 hours.

6. The method according to any one of the preceding claims, wherein the heating process of the rice and liquid mixture made in step (a) is carried out by heating at atmospheric pressure or above atmospheric pressure.

7. The method according to any one of claims 1 to 5, wherein the heating process of the rice and liquid mixture made in step (a) is carried out using overheated steam.

8. The method according to any one of the preceding claims, wherein the liquid mixture of step (c) comprises an ingredient selected from the group consisting of animal or vegetable broth, animal fat or vegetable oil, a vegetable processed into paste, an aromatic substance, an additive, a preservative, a dye, soy sauce, liquid egg, starch, a spice, cheese, wine and an animal or vegetable protein, as well as any of the combinations thereof.

9. The method according to any one of the preceding claims, wherein in step (c) the rice separated from the remaining liquid after cooking is cooled prior to its hydration.

10. The method according to any one of claims 1 to 8, wherein in step (c), the rice separated from the remaining liquid after the cooking in step (b) is dehydrated prior to its hydration.

11. The method according to any one of the preceding claims, wherein the liquid mixture from step (c) is added at a temperature of between 5 and 80 °C.

12. The method according to any one of the preceding claims, wherein the hydration of the rice in step (c) is maintained until the rice multiplies its weight at least 2.3 times with respect to the initial weight of the rice added in step (a).

13. The method according to any one of the preceding claims, wherein the liquid mixture of step (c) is added in a percentage by weight comprised between 50 and 200% by weight with respect to the weight of the initial rice added in step (a).

14. The method according to any one of the preceding claims, wherein the rice is non-parboiled and having low amylose content, of less than 22% by weight, or average, comprised between 22 and 25% by weight.

15. The method according to claim 14, wherein the rice is selected from a group consisting of Bomba, Senia, Bahía, J. Sendra, Albufera, Arborio, Carnaroli, Maratelli, Venere and Vialone nano.

16. The method according to any one of the preceding claims, wherein an additional step (e) of vacuum packaging or packaging with modified atmosphere of the partially cooked rice made in step (d) is carried out.

17. The method according to claim 16, wherein a subsequent step (f) of pasteurisation of the partially cooked rice, once packaged in step (e), is carried out.

18. A partially cooked rice made by means of a method according to any one of claims 1 to 17, **characterised in that** the rice grain contains between 60 and 70% moisture by weight.

19. The partially cooked rice according to claim 18, wherein said rice has a low *in vitro* glycaemic index, lower than 45.

20. The partially cooked rice according to claim 18 or 19, wherein the weight of the rice is at least 2.8 times the weight of the initial dry rice used in step (a) of the method to make the same.

21. A food product **characterised in that** it comprises partially cooked rice according to any one of claims 18 to 20, wherein said product requires, for its consumption, cooking for between 1 and 7 minutes without adding liquid.

22. The food product according to claim 21, wherein the cooking time for its consumption is comprised between 2 and 5 minutes.
